# EUROPÄISCHE PATENTSCHRIFT

(11) **EP 1 416 837 B1**
(45) Veröffentlichungstag und Bekanntmachung des Hinweises auf die Patenterteilung: **05.04.2006**
(21) Anmeldenummer: 02785108.8
(22) Anmeldetag: 09.08.2002
(51) Int. Cl.: A47J 27/08

(54) **SCHLIESSVORRICHTUNG FÜR EINEN BEHÄLTER**
CLOSING DEVICE FOR A CONTAINER
DISPOSITIF DE FERMETURE POUR RECIPIENT

(30) Priorität: 10.08.2001 DE 20113356 U
(43) Veröffentlichungstag der Anmeldung: 12.05.2004
(73) Patentinhaber: Synkrona AG, 6370 Stans (CH)
(72) Erfinder: SCHULTZ, Horst, 65239 Hochheim (DE)
(74) Vertreter: Herden, Andreas F.
(86) Internationale Anmeldenummer: PCT/EP2002/008946
(87) Internationale Veröffentlichungsnummer: WO 2003/015594

(56) Entgegenhaltungen:
- CH-A- 254 203
- DE-C- 896 409
- FR-A- 2 809 608
- US-A- 5 613 424

## Beschreibung

Die Erfindung betrifft eine Schließvorrichtung für einen Behälter im allgemeinen und für einen Kochtopf oder Dampfdruckkochtopf im speziellen.

Im Zuge eines stetig wachsenden Gesundheitsbewußtseins steigt auch der Bedarf an ernährungsphysiologisch vorteilhaften Zubereitungsweisen für Speisen. Gleichzeitig besteht in einer hektischen Welt, in der die Menschen immer weniger Zeit mit alltäglichen Arbeiten im Haushalt zubringen wollen und können, ein Bedürfnis nach schneller und effizienter Speisenzubereitung. Dampfdruckkochtöpfe erfüllen diese beiden gegensätzlich erscheinenden Anforderungen in hervorragender Weise durch schnelles und schonendes Garen der Speisen.

Grundsätzlich sind Dampfdruckkochtöpfe seit vielen Jahrzehnten bekannt. Die bekannten Dampfdruckkochtöpfe weisen allerdings eine Reihe von Nachteilen auf.

So ist zum Beispiel aus den fünfziger Jahren, genauer aus der Patentschrift DE-896 409, ein Dampfdruckkochtopf mit einem Deckel bekannt, welcher mittels dreier um den Deckelrand greifender Klauen verschlossen wird. Nachteilig bei diesem Verschlußmechanismus ist, dass zum Verschließen eine große Kraft notwendig ist, welche über einen unförmigen Hebelgriff aufgebracht wird.

Neuere Entwicklungen auf dem Gebiet der Dampfdruckkochtöpfe sind zum Beispiel in den Offenlegungsschriften WO 96/01070, EP-A-1 029 483 und EP-A-1 082 932 beschrieben.

Eine aus der Offenlegungsschrift WO 96/01070 bekannte Verschlußvorrichtung weist einen Deckel mit zwei radial verschiebbaren Klemmbacken auf, welche durch einen Federmechanismus zusammengezogen werden. Nachteilig hierbei ist, dass eine Dichtung durch senkrechtes Drücken auf den Deckel vor dem Verschließen der Klemmbacken undefiniert vorgespannt wird. Danach gleiten die Klemmbacken ruckartig nach innen und verursachen beim Anschlagen an den Topfrand unangenehmen Lärm.

Die Offenlegungsschrift EP-A-1 082 932 zeigt einen Dampfdruckkochtopf mit einem ähnlichen Deckel wie die Schrift WO 96/01070.

Aus der US-Patentschrift 5,613,424 ist eine Kontrolleinrichtung für das Öffnen und Schließen von Schließbacken für einen Drucktopf bekannt. Die Einrichtung umfasst ein Kontrollelement, welches auf einem Deckel montiert ist und sich, in Bewegungsarme eingreifend, radial in Bezug auf den Deckel bewegt.

Weiter beschreibt die Patentschrift CH-254 203 einen Dampfdruckkochtopf mit einem nach außen vorstehenden Rand. Der Deckel des Dampfdruckkochtopfes umfasst drei an deren Ende U-förmig abgebogene Griffschenkel, welche unter den Rand greifen und den Deckel mit einer eingelegten Dichtung gegen die.Oberseite des Topfrandes pressen.

Aus dem Dokument FR-2 809 608 Al ist eine Schließ- und Öffnungseinrichtung für einen Deckel eines Dampfdruckkochtopfs bekannt, welcher Deckel vier Arme mit Klemmbacken aufweist, die durch Rotation eines Kontrollelementes angetrieben sind.

Ferner zeigt die Offenlegungsschrift EP-A-1 029 483 eine Abdeckung für einen Drucktopf mit vier beweglichen Klemmbacken, welche über einen Kurbelmechanismus radial bewegt werden können. Dieser Kurbelmechanismus umfasst eine große Vielzahl von beweglichen Bauteilen, welche zum Teil aus, Kunststoff bestehen. Daher ist dieser Kurbelmechanismus kompliziert und kostenaufwendig in Herstellung und Montage sowie wenig haltbar und problematisch in Bezug auf hygienische Anforderungen.

Allen genannten Vorrichtungen sind aber noch weitere gravierende Nachteile gemein.

Die genannte Vorrichtungen sind unförmig, ästhetisch wenig ansprechend, schlecht zu reinigen und müssen mit geringen Toleranzen gefertigt werden.

Darüber hinaus ist ein weiterer schwerwiegender Nachteil, dass die bekannten Vorrichtungen nur auf speziell angepaßten Töpfen verwendet werden können. Diese Töpfe weisen zumeist verstärkte und U-förmig gebogene Ränder auf, um mit den Vorrichtungen adäquat zusammenwirken und den Druckbelastungen im Betrieb standhalten zu können.

Es ist daher eine Aufgabe der vorliegenden Erfindung, eine Schließvorrichtung für einen Behälter, insbesondere für einen Kochtopf oder Dampfdruckkochtopf zur Verfügung zu stellen, welche die Nachteile bekannter Vorrichtungen vermeidet oder zumindest mindert.

Eine weitere Aufgabe der Erfindung ist es, eine ästhetisch ansprechende, kostengünstige, leicht zu reinigende, mit geringem Kraftaufwand zu schließende und zu öffnende, einfach zu bedienende und/oder sichere Schließvorrichtung für einen Behälter, insbesondere für einen Kochtopf oder Dampfdruckkochtopf zur Verfügung zu stellen.

Noch eine Aufgabe der Erfindung ist es, eine Schließvorrichtung zur Verfügung zu stellen, mit welcher verschiedene handelsübliche Kochtöpfe, insbesondere mit nach unten abgeschrägtem Schüttrand, derart verschließbar sind, dass eine Dampfdruckkochtopfanordnung entsteht.

Die Aufgabe der Erfindung wird in überraschend einfacher Weise bereits durch den Gegenstand des Anspruchs 1 gelöst.

Die erfindungsgemäße Schließvorrichtung ist für einen Behälter mit einer Öffnung, insbesondere für einen Kochtopf oder Dampfdruckkochtopf mit einem nach außen ragenden Schüttrand vorgesehen. Die Schließvorrichtung umfasst einen Deckel oder inneren Deckel zum Verschließen der Öffnung des Behälters. Ferner umfasst die Schließvorrichtung eine Schließelementanordnung mit zumindest einem ersten Schließelement, vorzugsweise einer Mehrzahl von insbesondere gleichen Schließelementen und eine Bewegungseinrichtung zum Bewegen zumindest des ersten Schließelements, bevorzugt aller Schließelemente.

Der Behälter weist eine von einem Boden zur Öffnung verlaufende Achse, welche bei kreisrunden Behältern insbesondere die Rotationssymmetrieachse des Behälters ist auf. Die Achse verläuft bevorzugt senkrecht zum Behälterboden.

Ferner weist der Behälter eine Öffnungsebene auf, welche durch den Schüttrand definiert wird und die bevorzugt parallel zu dem Behälterboden und senkrecht zu der Achse verläuft. Das erste Schließelement bzw. die Schließelemente werden unter einer Betätigung der Bewegungseinrichtung einwärts gerichtet oder auf die Achse zu bewegt, wobei während der einwärts gerichteten Bewegung oder Verschiebung eine Aufwärtsbewegung oder Bewegung vom Behälterboden weg zumindest eines Abschnitts des Schließelements bzw. der Schließelemente, stattfindet.

Dieses insbesondere schräg einwärts und aufwärts gerichtete Bewegen oder Verschieben des Schließelements oder der Schließelemente sorgt vorteilhafterweise für einen kontrollierten abwärts gerichteten Anpressdruck der Schließvorrichtung auf den Behälter oder Kochtopf, insbesondere zum definierten Vorspannen einer zwischen dem Deckel und dem Behälter angeordneten Dichtung.

Ferner wird durch die Aufwärtsbewegung des Schließelements oder der Schließelemente auch bei größeren Fertigungstoleranzen ein sicherer Verschluss erzielt. Die erfindungsgemäße Schließvorrichtung eignet sich besonders auch für handelsübliche Kochtöpfe mit einem nach außen ragenden Schüttrand, welcher im äußeren Bereich schräg nach unten abgewinkelt ist. Für derartige Kochtöpfe eignen sich die meisten bekannten Deckel für Dampfdruckkochtöpfe nicht, da sich deren Klemmbacken zumeist horizontal, d.h. parallel zu der Öffnungsebene oder senkrecht zu der Achse bewegen. Derartige bekannte Schließvorrichtungen würden, wenn man sie dennoch zweckwidrig verwenden würde, an dem äußersten nach unten ragenden Abschnitt des Schüttrandes, d.h. mit großer Hebelwirkung angreifen und möglicherweise den Schüttrand verbiegen.

Im Gegensatz dazu vermag das Schließelement der erfindungsgemäßen Schließvorrichtung weiter innen in Bezug auf die Topfachse anzugreifen. Daher kann die erfindungsgemäße Schließvorrichtung mit handelsüblichen auch relativ dünnwandigen Kochtöpfen zusammenwirken, wobei dennoch eine druckbeständige Dampfdruckkochtopfanordnung entsteht.

Insbesondere definiert die Schließelementanordnung zumindest eine Öffnungsstellung, in welcher die Schließvorrichtung von dem Behälter abnehmbar ist und eine Schließstellung, in welcher der Deckel den Behälter, insbesondere im wesentlichen fluiddicht verschließt.

Bevorzugt ist der in der Schließstellung verschlossene Behälter druckbeständig bis zumindest etwa 5 bar Innendruck oder Innenüberdruck.

Vorzugsweise ist das Schließelement oder sind die Schließelemente in der Öffnungsstellung in einer ersten, insbesondere äußeren Position und in der Schließstellung in einer zweiten, insbesondere inneren Position und ist, bzw. sind zwischen der ersten und zweiten Position bewegbar oder verschiebbar. Die Bewegung oder Verschiebung zwischen der ersten und zweiten Position erfolgt insbesondere durch eine einwärts gerichtete Radialbewegung, bei welcher das erste Schließelement bzw. die Schließelemente auf dem Deckel gleiten.

Das erste Schließelement weist insbesondere einen äußeren Rand zum Angreifen an dem Schüttrand des Behälters auf, wobei der äußere Rand bei der schräg aufwärts und radial einwärts gerichteten Bewegung des ersten Schließelements von unten an dem Schüttrand des Behälters zur Anlage kommt und dabei durch die Aufwärtskomponente der Bewegung den Schüttrand mit einer axial aufwärts gerichteten Kraftkomponente beaufschlagt.

Besonders bevorzugt weist der nach außen ragende Schüttrand einen sich auswärts erstreckenden im wesentlichen horizontalen inneren Ringabschnitt und einen sich abwärts oder schräg abwärts erstreckenden äußeren Ringabschnitt auf. Durch die schräg einwärts und aufwärts gerichtete Bewegung des ersten Schließelements beim Verschließen des Behälters ist der äußere Rand des Schließelements zumindest abschnittsweise von unten an den inneren Ringabschnitt des Schüttrandes anlegbar. Der Anlagepunkt oder -ring befindet sich bevorzugt möglichst weit innen, z.B. an der inneren Hälfte des inneren Ringabschnitts, so dass die Hebelverhältnisse optimiert sind und lediglich ein geringes Drehmoment auf den Schüttrand ausgeübt wird. Insbesondere befindet sich der Anlagepunkt oder -ring nicht an dem äußeren Ringabschnitt des Schüttrandes.

Gemäß einer bevorzugten Ausführungsform der Erfindung umfasst der äußere Rand des Schließelements einen sich abwärts erstreckenden ersten Abschnitt und einen sich aufwärts erstreckenden zweiten Abschnitt, wobei der zweite Abschnitt in Bezug auf die Behälterachse innerhalb des ersten Abschnitts angeordnet ist. Der zweite Abschnitt verläuft, z.B. senkrecht oder schräg nach innen ansteigend in Bezug auf die Öffnungsebene.

Vorzugsweise befindet sich zwischen dem ersten und zweiten Abschnitt ein dritter Abschnitt, welcher sich bevorzugt im wesentlichen parallel zur Topfebene erstreckt. Beim Schließen der Schließvorrichtung kommt insbesondere der zweite Abschnitt des äußeren Randes des Schließelementes an dem inneren Ringabschnitt des Behälters kraftbeaufschlagt zur Anlage, so dass die Schließvorrichtung und mit dieser auch ggfs. die Dichtung auf den Behälter gepresst werden. Dabei wird besonders bevorzugt die Schließstellung durch die erzeugten Reibungskräfte selbsthemmend gehalten.

Als besonders vorteilhaft und daher bevorzugt hat sich ein Winkel im Bereich von 5° bis 30°, insbesondere im Bereich von 10° bis 20°, am meisten bevorzugt im Bereich von etwa 15° zwischen der schräg aufwärts gerichteten Verschiebung des äußeren Randes des Schließelements beim Schließen und der Öffnungsebene des Behälters erwiesen.

Die Dichtung ist insbesondere als Dichtring ausgeführt und läuft bevorzugt ringförmig um die Schließvorrichtung um. Die Dichtung ist vorzugsweise an dem Deckel lösbar festgelegt und umfasst z.B. Silikon oder silikonhaltiges Material.

Besonders zweckmäßig wird eine sogenannte Dichtlippe oder Lippendichtung verwendet, welche einen im wesentlichen U- oder V-förmigen Querschnitt aufweist. Die Lippendichtung hat den besonderen Vorteil, dass der im Innern des Behälters erzeugte Druck die Dichtung auseinander drückt und dabei die Dichtwirkung verbessert . Somit genügt eine relativ geringe Vorspannung, welche durch das Verschließen erzeugt wird, um trotzdem einen sehr druckfesten Verschluß zu erzielen.

Die Segmentspitze kann aber hierbei ausgenommen oder ausgeschnitten sein. Die Kreissegmentform ist insbesondere in Zusammenhang mit einer Anordnung aus einer Mehrzahl von, bevorzugt gleichen Schließelementen vorteilhaft.

Es bilden die Schließelemente in der Schließstellung eine im wesentlichen geschlossene Abdeckung, dadurch dass die kreissegmentförmigen Schließelemente seitlich, bevorzugt bündig aneinander grenzen. Vorzugsweise finden 2, 3, 4, 5, 6, 8 oder mehr Schließelemente Verwendung. Eine ggfs. verbleibende zentrale Öffnung der Anordnung aus den Schließelementen wird bevorzugt durch einen Handgriff, welcher von der Bewegungseinrichtung umfasst ist, optisch abgedeckt, so dass in der Schließstellung der Eindruck eines herkömmlichen Topfdeckels entsteht. Insbesondere ist der Deckel in der Schließstellung im wesentlichen vollständig durch die Schließelementanordnung verdeckt oder abgedeckt.

Vorzugsweise sind der Deckel und/oder die Schließelementanordnung zumindest abschnittsweise nach außen gewölbt und bilden vorzugsweise je einen Kugelabschnitt. Bei dieser Ausführungsform liegen die Schließelemente bevorzugt flächig auf dem Deckel auf und gleiten auf diesem. Als besonders zweckmäßig hat sich ein Radius im Bereich von 100 mm bis 1000 mm, bevorzugt im Bereich von 300 mm bis 600 mm für die Wölbung der Kugelabschnitte ergeben.

Vorzugsweise sind die Schließelementanordnung und der Deckel durch eine zentrale Befestigungseinrichtung, z.B. eine Schraube lösbar verbindbar. Dies erleichtert eine gründliche Reinigung der Schließvorrichtung erheblich.

Bevorzugt weist die Schließvorrichtung, insbesondere der Deckel Zentriermittel, z.B. von dem Deckel nach unten ragende Vorsprünge auf. Die Zentriermittel sorgen in der Öffnungsstellung und/oder der Schließstellung für eine sichere und präzise Zentrierung der Schließvorrichtung, insbesondere des Deckels, auf dem Behälter.

Die Bewegungseinrichtung umfasst bevorzugt eine z.B. an dem Handgriff befestigte Kulissenscheibe. Die Kulissenscheibe weist neben einer Achsenbohrung, je Schließelement einen gekrümmten und schräg zu dem Umfang der Kulissenscheibe verlaufenden Schlitz auf. In dem Schlitz läuft ein Bolzen, der mit dem entsprechenden Schließelement ortsfest verbunden ist. Durch Drehung der Kulissenscheibe wird so der Bolzen mit dem Schließelement radial verschoben. Alternativ oder ergänzend kann auch eine Zahnradgetriebeanordnung verwendet werden.

Besonders bevorzugt ist die Schließvorrichtung, ausgenommen der Handgriff, insbesondere vollständig, aus Metall, z.B. Edelstahl gefertigt. Dadurch wird eine stabile, langlebige und hygienische Schließvorrichtung zur Verfügung gestellt, bei welcher die Ausdehnungskoeffizienten verschiedener Bauteile aufeinander und auf den Behälter angepasst sind.

Die erfindungsgemäße Schließvorrichtung umfasst ferner bevorzugt eine Sicherheitseinrichtung mit einer Blockiereinrichtung zum Blockieren der Bewegung der Schließelemente und/oder ein Überdruckablassventil, um den gesetzlichen Sicherheitsvorschriften zu entsprechen. Derartige Sicherheitseinrichtungen sind dem Fachmann grundsätzlich bekannt.

Im folgenden wird die Erfindung anhand von bevorzugten Ausführungsformen und unter Bezugnahme auf die Figuren näher erläutert.

### Kurzbeschreibung der Figuren

Es zeigen:
- Fig. 1: eine teilweise geschnittene Draufsicht von oben auf
eine erste Ausführungsform der erfindungsgemäßen Schließvorrichtung in einer Schließstellung,
- Fig. 2: eine Seitenansicht der Schließvorrichtung aus Fig. 1,
- Fig. 3: eine Schnittzeichnung entlang der Linie A-A eines Ausschnitts der Schließvorrichtung aus Fig. 1 zusammen mit einem Ausschnitt eines Topfes,
- Fig. 4: einen vergrößerten Ausschnitt der Schließvorrichtung und des Topfes aus Fig. 3, aber in einer Öffnungsstellung,
- Fig. 5: einen Ausschnitt einer Schnittdarstellung einer zweiten Ausführungsform der erfindungsgemäßen Schließvorrichtung entsprechend einem Schnitt entlang der Linie B-B in Fig. 1,
- Fig. 6a: einen Ausschnitt einer Schnittzeichnung einer dritten Ausführungsform der erfindungsgemäßen Schließvorrichtung entsprechend einem Schnitt entlang der Linie A-A in Fig. 1 in der Öffnungsstellung,
- Fig. 6b: wie Fig. 6a, aber in einer halb geschlossenen Stellung,
- Fig. 6c: wie Fig. 6a, aber in der Schließstellung,
- Fig. 7: einen Ausschnitt einer Schnittzeichnung eines Schließelements gemäß einer vierten Ausführungsform der Erfindung,
- Fig. 8: eine ausschnittsweise Draufsicht von oben auf die Schließvorrichtung ohne Handgriff, und
- Fig. 9: eine Schnittzeichnung durch eine Sicherheitseinrichtung.

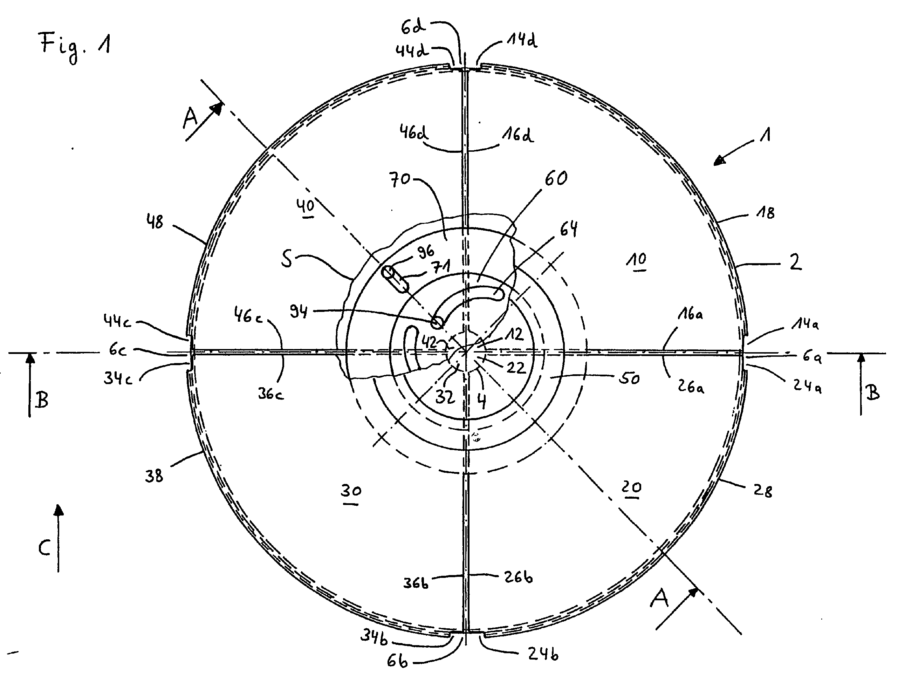

Fig. 1 zeigt eine Ausführungsform der erfindungsgemäßen Schließvorrichtung 1 mit einer Schließelementanordnung 2, umfassend vier im wesentlichen kreissegmentförmige Schließelemente 10, 20, 30, 40 und einen rotationssymmetrischen zentral angeordneten bezüglich der Schließvorrichtung 1 drehbaren Handgriff 50. Jedes der vier Schließelemente 10, 20, 30, 40 weist je einen zentralen kreisbogenförmigen Ausschnitt 12, 22, 32, 42 und je zwei aneinander angrenzende Ausschnitte 14d, 14a, 24a, 24b, 34b, 34c, 44c, 44d auf, welche an den äußeren am Umfang befindlichen Ecken der Schließelemente angeordnet sind.

In der in Fig. 1 gezeigten Schließstellung der Schließvorrichtung 1 bilden die Ausschnitte 12, 22, 32, 42 im wesentlichen einen zentralen kreisförmigen Ausschnitt 4 der Schließelementanordnung 2. Die Ausschnitte 14d, 14a, 24a, 24b, 34b, 34c, 44c, 44d bilden vier unter 90° entlang des Umfangs der Schließelementanordnung 2 angeordnete Ausschnitte 6a, 6b, 6c, 6d.

Die vier Schließelemente 10, 20, 30, 40 weisen je zwei radiale Kanten 16d, 16a, 26a, 26b, 36b, 36c, 46c, 46d und je einen äußeren kreisbogenförmigen Randbereich 18, 28, 38, 48 auf.

Bevorzugt wird die Schließelementanordnung 2 zunächst einstückig hergestellt und geformt und anschließend mittels eines Lasers oder einer Säge in vier gleiche Schließelemente 10, 20, 30, 40 geschnitten. Der Laserschnitt ist besonders vorteilhaft, da ein Entgraten entfällt.

Die Schließvorrichtung 1 ist im Bereich S aufgeschnitten, so dass ein Ausschnitt einer Kulissenscheibe 60 und einer Halte- oder Führungsplatte 70 sichtbar ist.

Der Durchmesser der Schließvorrichtung beträgt etwa 240 mm und die Stärke der Schließelemente etwa 1 mm bis 1,2 mm.

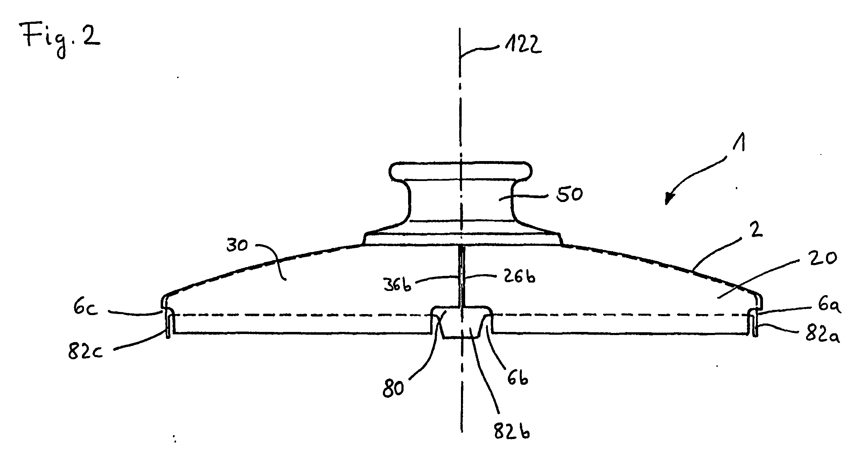

Fig. 2 zeigt die Schließvorrichtung 1 in einer Seitenansicht entlang der Richtung C in Fig. 1. Es sind die zwei Schließelemente 20 und 30, der Handgriff 50 und ein Deckel 80, welcher innerhalb der Schließelementanordnung 2 angeordnet ist, dargestellt. Der Deckel 80 weist vier in den Ausschnitten 6a, 6b, 6c, 6d der Schließelementanordnung 2 angeordnete Zentrierlaschen 82a, 82b, 82c, 82d auf, von denen die hintere Zentrierlasche 82d nicht gezeigt ist.

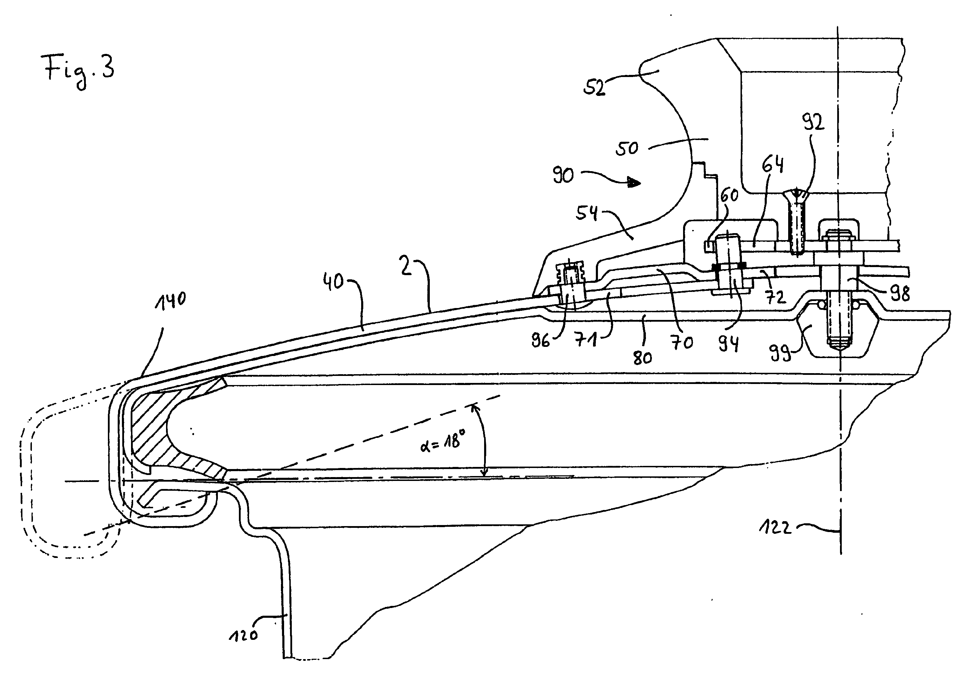

Fig. 3 zeigt die Schließvorrichtung 1 in der Schließstellung (durchgezogene Linien). Ein Randbereich 140 des Schließelements 40 ist mittels gestrichelter Linien noch in der Öffnungsstellung dargestellt. Die übrigen Schließelemente 10, 20, 30 sind im wesentlichen identisch mit dem ersten Schließelement 40.

Fig. 3 zeigt ferner eine Bewegungseinrichtung 90 umfassend den Handgriff 50 aus Kunststoff, die metallische Kulissenscheibe 60, die metallische Führungsplatte 70, eine Schraube 92, einen Mitnahmezapfen 94, eine Führungsschraube 96, eine zentrale Schraube 98 und eine Zentralmutter 99.

Der Handgriff 50 umfasst einen Drehknopf 52 und eine Fingerschutzplatte 54. Die Führungsplatte 70 ist zwischen der Kulissenscheibe 60 und dem Schließelement 40 angeordnet und ist vollständig durch den Handgriff 50 verdeckt.

Die Führungsschraube 96 verbindet das Schließelement 40 mit der Führungsplatte 70, wobei das Schließelement 40 radial bezüglich der Führungsplatte 70 verschiebbar ist. Bei der Verschiebung gleitet die Führungsschraube 96 in einem radial verlaufenden Langloch 71 in dem Schließelement 40. Der Mitnahmezapfen 94 verbindet ebenfalls radial verschieblich das Schließelement 40 mit der Führungsplatte 70, wobei der Mitnahmezapfen 94 in einem Langloch 72 der Führungsplatte 70 geführt gleitet. Ferner erstreckt sich der Mitnahmezapfen 94 durch ein gekrümmtes Langloch 64 in der Kulissenscheibe 60. Die Verschiebemechanik für die anderen drei gleichen Schließelemente 10, 20, 30 ist äquivalent ausgeführt.

Durch Drehen des Handgriffs 50 um eine Achse 122 und der an den Handgriff 50 befestigten Kulissenscheibe 60 wird mittels des Mitnahmezapfens 94 das Schließelement 40 radial zwischen der Öffnungs- und der Schließstellung verschoben.

Die Schließelementanordnung 2 und der Deckel 80 können leicht durch ein Entfernen der Zentralmutter 99, z.B. zum Reinigen, voneinander getrennt werden.

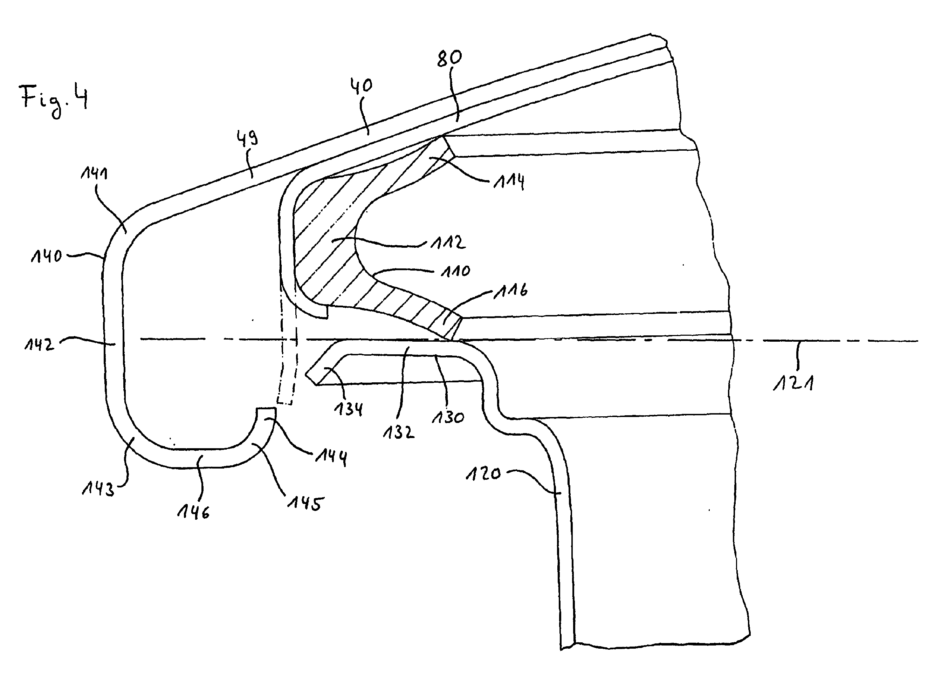

Eine Vergrößerung des Randbereichs 140 in der Öffnungsstellung ist in Fig. 4 dargestellt. Fig. 4 zeigt eine kreisringförmig umlaufende Lippendichtung 110. Die Lippendichtung 110 ist aus Silikon gefertigt und ist im wesentlichen von U-förmigem Querschnitt. Die Lippendichtung 110 umfasst einen zentralen Abschnitt 112 und einen oberen und unteren Lippenabschnitt 114 bzw. 116. Der Zentralabschnitt 112 und der obere Lippenabschnitt 114 liegen von innen und unten an dem Deckel 80 an. Der untere Lippenabschnitt 116 kommt an einem Schüttrand 130 eines Topfes 120 mit kreisförmigem Querschnitt zur Anlage, wenn die Schließvorrichtung 2 auf den Topf oder Kochtopf 120 aufgesetzt wird.

Das Schließelement 40 weist einen in Bezug auf das Topfinnere auswärts gewölbten Deckabschnitt 49 und krallenförmigen Randabschnitt 140 zum Umgreifen des Schüttrandes 130 auf. Die Oberfläche des Deckabschnitts 49 ist kugelabschnittsförmig bei einem Radius von etwa 400 mm.
Der krallenförmige Randabschnitt 140 weist einen ersten sich abwärts erstreckenden Abschnitt 142 und einen zweiten sich aufwärts erstreckenden Abschnitt 144 auf. Hierbei sind die Begriffe abwärts und aufwärts erstreckend im Verlauf des Schließelements 40 vom Zentrum oder der Achse 122 weg zu verstehen. Zwischen dem ersten Abschnitt 142 und dem zweiten Abschnitt 144 ist ein dritter, gemäß diesem Ausführungsbeispiel horizontaler Abschnitt 146 angeordnet. Der zweite und dritte Abschnitt 144, 146 sind innerhalb in Richtung der Achse oder Topfachse 122 in Bezug auf den ersten Abschnitt 142 und unterhalb des Deckabschnitts 49 angeordnet. Das Schließelement 40 ist aus Metall, insbesondere Edelstahlblech gefertigt und der Randabschnitt 140 ist umgebogen, umgerollt oder umgebörtelt, so dass zwischen den Abschnitten 49, 142, 146 und 144 des Schließelements 40 jeweils gebogene Abschnitte 141, 143 und 145 vorhanden sind.

Der Schüttrand 130 des Topfes 120 weist einen horizontalen oder parallel zur Topfoberfläche 121 verlaufenden inneren Ringabschnitt 132 und einen nach unten abgeschrägten äußeren Ringabschnitt 134 auf.

Bei dieser Ausführungsform sind die Zentrierlaschen 82a, 82b. 82c, 82d einstückig mit dem Deckel 80 gefertigt und strichpunktartig in Fig. 4 dargestellt.

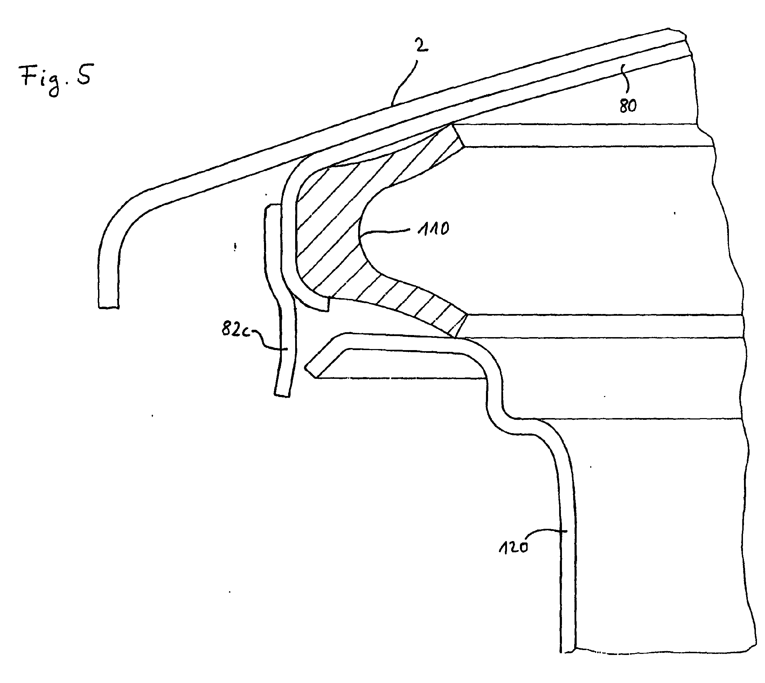

Fig. 5 zeigt einen Ausschnitt einer Schnittzeichnung entsprechend einem Schnitt entlang der Linie B-B in Fig. 1.

Fig. 5 veranschaulicht eine alternative Ausführungsform der Zentrierlaschen. Es ist eine Zentrierlasche 82c, welche von außen an dem äußeren Rand des Deckels 80 befestigt, z.B. angeschweißt ist dargestellt.

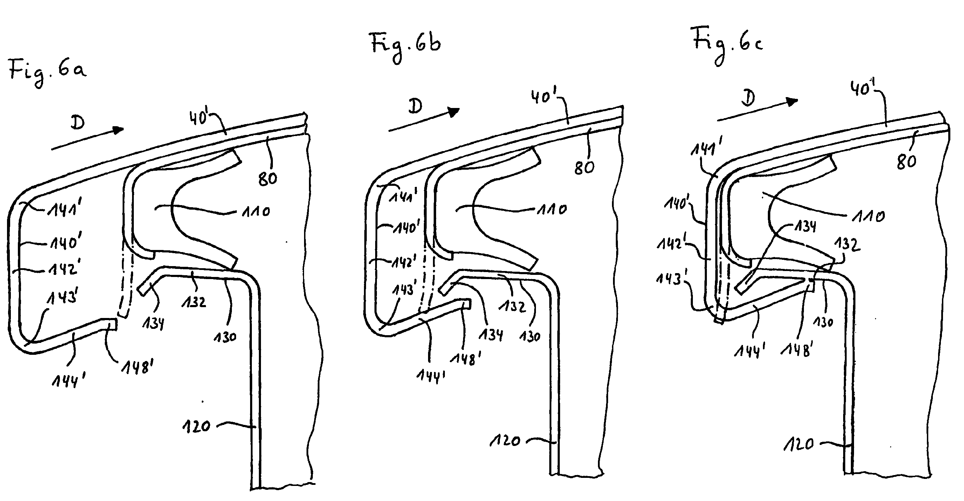

Die Figuren 6a bis 6c zeigen die Bewegung eines gegenüber dem Schließelement 40 abgewandelten Schließelementes 40'. Das Schließelement 40' umfasst einen äußeren sich nach unten erstreckenden ersten Abschnitt 142' und einen sich schräg nach oben erstreckenden zweiten Abschnitt 144'. Angrenzend an den zweiten Abschnitt 144' befindet sich noch ein im wesentlichen horizontal verlaufender Endabschnitt 148'. Weiter sind gebogene Abschnitte 141' und 143' vorhanden.

Fig. 6a zeigt das Schließelement 40' in der Öffnungsstellung. Beim Schließen bewegt sich das Schließelement 40' auf dem Deckel 80 gleitend in Richtung D.

Es ist ersichtlich, dass sich der zweite Abschnitt 144' und der Endabschnitt 148' zusammen mit dem gesamten Schließelement 40' bei der schließenden Einwärtsverschiebung aufwärts bewegen. Wie am besten in Fig. 3 zu sehen ist, beträgt der Winkel α zwischen der Bewegungsrichtung des Endabschnitts 148' in diesen Ausführungsbeispielen etwa 18°.

Fig. 6b zeigt das Schließelement 40' bzw. die Schließvorrichtung 1 in einer halb geschlossenen Position, bei welcher der innere Abschnitt 144' bereits bereichsweise mit dem Schüttrand 130 des Topfes 120 überlappt.

Weiter bezugnehmend auf Fig. 6c ist das Schließelement 40' bzw. die Schließelementanordnung 2 in dem geschlossenen Zustand oder Schließzustand gezeigt. In dem Schließzustand liegt der zweite Abschnitt 144' des Schließelements 40' oder genauer der innere horizontale Endabschnitt 148' an dem Schüttrand 130 kraftbeaufschlagt an. Es ist ersichtlich, dass durch die schräg aufwärts gerichtete Bewegung des Schließelements 40' eine senkrechte oder axiale Kraft auf den Deckel 80 bzw. die Lippendichtung 110 ausgeübt wird, so dass eine definierte Vorspannung der Lippendichtung 110 erzielt wird. Insbesondere wird die Dichtung 110 beim schließenden Betätigen der Bewegungseinrichtung 90 automatisch vorgespannt.

Der Angriffspunkt des horizontalen inneren Abschnitts 148' liegt relativ weit innen an dem Schüttrand 130, in diesem Ausführungsbeispiel innerhalb der Mitte des inneren Ringabschnitts 132. Hierdurch wird das Drehmoment auf dem Schüttrand 130 gering gehalten, so dass die Schließvorrichtung 1 sogar für Töpfe 120 mit einer Schüttrandstärke von kleiner als 1,2 mm oder kleiner als 1,0 mm Verwendung finden kann.

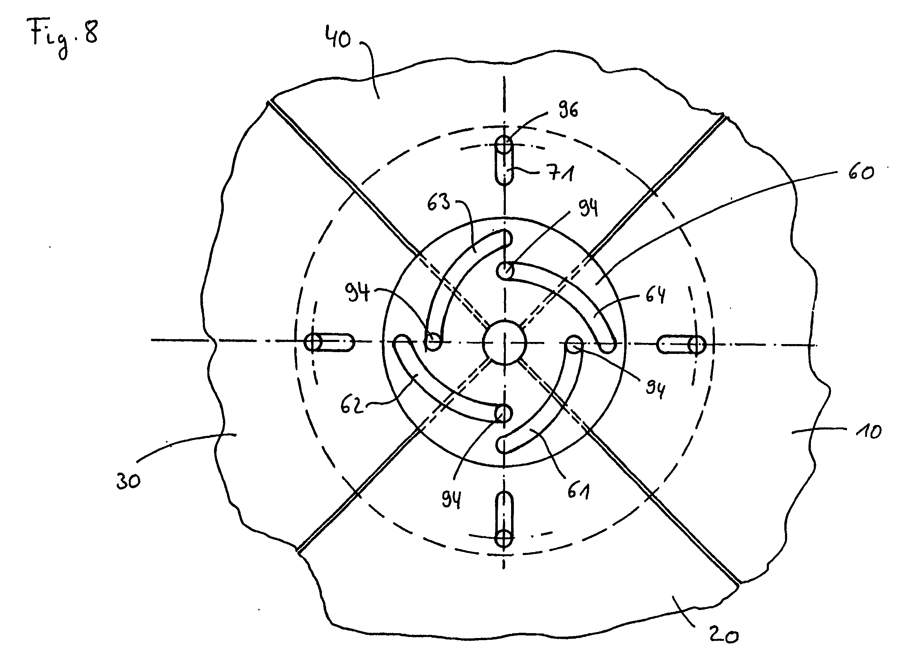

Fig. 7 zeigt eine vierte Ausführungsform für die Form des äußeren Randes des Schließelements. Gemäß dieser vierten Ausführungsform umfasst der äußere Rand 140" einen zweiten schräg nach oben und innen verlaufenden zweiten Abschnitt 144" mit einem bogenförmig nach unten abgekröpften Endabschnitt 148", welcher in der Schließstellung an dem Schüttrand zur Anlage kommt.

Fig. 8 zeigt eine Draufsicht auf das Zentrum der Schließvorrichtung ohne den Handgriff 50. Es ist die Kulissenscheibe 60 aus Edelstahl mit vier gekrümmten Langlöchern 61, 62, 63, 64 gezeigt, welche nicht parallel zum Umfang der Kulissenscheibe 60 verlaufen und dadurch bei einer Drehung die Mitnahmezapfen 94 und damit die vier Schließelemente 10, 20, 30, 40 radial verschieben.

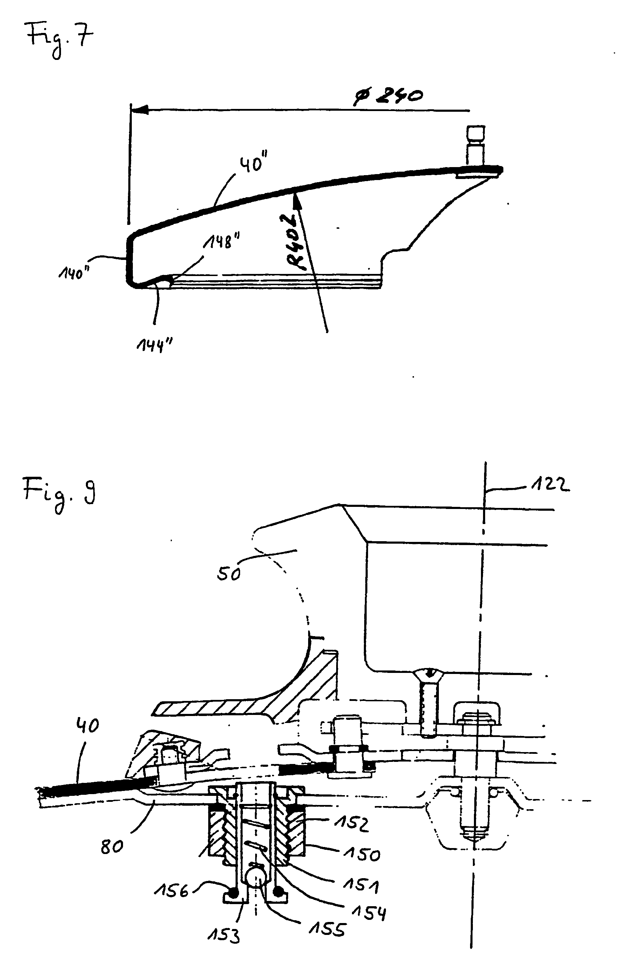

Fig. 9 zeigt eine Sicherheitseinrichtung 150 mit einer Blockiereinrichtung und integriertem Überdruckablassventil. Die Sicherheitseinrichtung 150 umfasst ein Gehäuse 151, eine Verschraubung 152, einen Ventilstift 153, eine Ventilfeder 154, eine Ventilkugel 155 und einen O-Ring 156.

Steigt der Innendruck in dem verschlossenen Topf über einen ersten Schwellenwert, so wird der Ventilstift 153 nach oben durch eine Öffnung in dem Schließelement 40 geschoben, so dass die Schließelementanordnung 2 blockiert wird und nicht mehr geöffnet werden kann. Steigt der Druck über einen zweiten Schwellenwert, z.B. 5 bar, so wird automatisch über die Ventilkugel 155 Druck abgelassen.

Es ist dem Fachmann ersichtlich, dass die Erfindung nicht auf die vorstehend beschriebenen Ausführungsformen beschränkt ist, sondern insbesondere in Bezug auf die konkrete Ausgestaltung des äußeren Randes der Schließelemente und des Schüttrandes variiert werden kann, ohne den Geist der Erfindung zu verlassen.

## Patentansprüche

1. Schließvorrichtung (1), für einen Behälter (120) mit einer Öffnung, insbesondere für einen Kochtopf mit einem nach außen ragenden Schüttrand (130), die Schließvorrichtung (1) umfassend einen Deckel (80) zum Verschließen der Öffnung des Behälters (120), eine Schließelementanordnung (2) mit einer Mehrzahl von Schließelementen (10, 20, 30, 40) und eine Bewegungseinrichtung (90) zum Bewegen der Schließelemente (10, 20, 30, 40),
wobei die Schließelemente unter einer Betätigung der Bewegungseinrichtung (90) einwärts gerichtet bewegbar sind,
wobei die Schließelementanordnung (2) zumindest eine Öffnungsstellung, in welcher die Schließvorrichtung (1) von dem Behälter abnehmbar ist und eine Schließstellung, in welcher der Behälter (120) mit dem Deckel (80) verschließbar ist, definiert **dadurch gekennzeichnet, dass**
die Schließelemente (10, 20, 30, 40) im wesentlichen kreissegmentförmig sind und die Schließelemente (10, 20, 30, 40) in dem Schließzustand aneinander angrenzen und eine vollflächige Abdeckung des Deckels (80) bilden.

2. Schließvorrichtung (1), Ansprüch 1, für einen Behälter (120) mit einer Öffnung, insbesondere für einen Kochtopf mit einem nach außen ragenden Schüttrand (130), die Schließvorrichtung (1) umfassend
einen Deckel (80) zum Verschließen der Öffnung des Behälters (120),
eine Schließelementanordnung (2) mit zumindest einem ersten Schließelement (40) und
eine Bewegungseinrichtung (90) zum Bewegen des ersten Schließelements (40), bei welcher
das erste Schließelement (40) unter einer Betätigung der Bewegungseinrichtung (90) einwärts gerichtet bewegbar ist und sich während der einwärts gerichteten Bewegung zumindest abschnittsweise aufwärts bewegt und das Schließelement einen krallenförmigen Randabschnitt (140) aufweist, welcher einen ersten sich abwärts erstreckenden Abschnitt (142) und einen zweiten sich aufwärts oder schräg nach oben erstreckenden Abschnitt (144) aufweist.

3. Schließvorrichtung (1) für einen Behälter (120) einer Öffnung und einem nach außen ragenden Schüttrand (130) nach Anspruch 1, welcher einen sich auswärts erstreckenden inneren Ringabschnitt (132) und einen sich auswärts und/oder abwärts erstreckenden äußeren Ringabschnitt (134) aufweist, wobei die Schlieβelemente sich während der einwärts gerichteten Bewegung zumindest abschnittsweise aufwärts bewegen und wobei die Schließelementanordnung (2) derart ausgebildet ist, dass in einer Schließstellung ein äußerer Rand (140, 140', 140") der Schließelemente (40, 40', 40") zumindest abschnittsweise von unten an den inneren Ringabschnitt (132) des Schüttrandes (130) anlegbar ist.

4. Schließvorrichtung (1) nach Anspruch, **dadurch gekennzeichnet, dass** die Schließelementanordnung (2) zumindest eine Öffnungsstellung, in welcher die Schließvorrichtung (1) von dem Behälter (120) abnehmbar ist und eine Schließstellung, in welcher der Behälter (120) mit dem Deckel (80) im wesentlichen fluiddicht verschließbar ist, definiert.

5. Schließvorrichtung (1) nach Anspruch 4, **dadurch gekennzeichnet, dass** der mit der Schließvorrichtung (1) verschlossene Behälter (120) in der Schließstellung druckbeständig bis zumindest etwa 5 bar Innendruck ist.

6. Schließvorrichtung (1) nach Anspruch 4 oder 5, **dadurch gekennzeichnet, dass** das erste Schließelement (40) in der Öffnungsstellung eine erste Position und in der Schließstellung eine zweite Position relativ zu dem Deckel (80) einnimmt und zwischen der Öffnungsstellung und der Schließstellung bewegbar ist.

7. Schließvorrichtung (1) nach einem der vorstehenden Ansprüche, **dadurch gekennzeichnet, dass** ein erstes Schließelement (40, 40', 40") einen äußeren Rand (140, 140', 140") aufweist, welcher bei der einwärts gerichteten Bewegung des ersten Schließelements (40, 40', 40") unter dem Schüttrand (130) des Behälters (120) an dem Behälter (120) zur Anlage kommt.

8. Schließvorrichtung (1) nach Anspruch 7, für einen Behälter (120) mit einem nach außen ragenden Schüttrand (130), welcher einen sich auswärts erstreckenden inneren Ringabschnitt (132) und einen sich auswärts und/oder abwärts erstreckenden äußeren Ringabschnitt (134) aufweist, **dadurch gekennzeichnet, dass** die Schließelementanordnung (2) derart ausgebildet ist, dass in der Schließstellung der äußere Rand (140, 140', 140") des ersten Schließelements (40, 40', 40") zumindest abschnittsweise von unten an den inneren Ringabschnitt (132) des Schüttrandes (130) anlegbar ist.

9. Schließvorrichtung (1) nach Anspruch 8, **dadurch gekennzeichnet, dass** durch die zumindest abschnittsweise Anlage des äußeren Randes (140, 140', 140") an dem inneren Ringabschnitt (132) die Schließstellung kraftschlüssig, reibschlüssig und/oder selbsthemmend gehalten ist.

10. Schließvorrichtung (1) nach einem der Ansprüche 7 bis 9, **dadurch gekennzeichnet, dass** der Behälter (120) eine Achse (122) definiert, welche sich mittig von einem Boden des Behälters (120) zu der Öffnung erstreckt und der äußere Rand (140, 140', 140") des ersten Schließelements (40, 40', 40") einen sich abwärts erstreckenden ersten Abschnitt (142, 142', 142") und einen sich aufwärts erstreckenden zweiten Abschnitt (144, 144', 144") aufweist, wobei der zweite Abschnitt (144, 144', 144") in Bezug auf die Achse (122) radial innerhalb des ersten Abschnitts (142, 142', 142") angeordnet ist.

11. Schließvorrichtung (1) nach Anspruch 10, **dadurch gekennzeichnet, dass** der äußere Rand (140) des ersten Schließelements (40) einen sich einwärts erstreckenden dritten Abschnitt (146) aufweist, welcher zwischen dem ersten (142) und dem zweiten Abschnitt (144) angeordnet ist.

12. Schließvorrichtung (1) nach einem der vorstehenden Ansprüche, wobei der Schüttrand (130) des Behälters (120) eine obere Öffnungsebene (121) definiert, **dadurch gekennzeichnet, dass** die einwärts und aufwärts gerichtete Bewegung des äußeren Randes (140) insbesondere des zweiten Abschnitts (144) des ersten Schließelements (40) unter einem Winkel (α) im Bereich von 5° bis 30°, bevorzugt im Bereich von 10° bis 20°, besonders bevorzugt im Bereich von etwa 15° zu der oberen Öffnungsebene (121) verläuft.

13. Schließvorrichtung (1) nach einem der vorstehenden Ansprüche, **dadurch gekennzeichnet, dass** eine insbesondere umlaufende Dichtung (110) an dem Deckel (80) angeordnet ist, mit welcher der Deckel (80) gegen den Behälter (120) fluiddicht verschließbar ist.

14. Schließvorrichtung (1) nach Anspruch 13, **dadurch gekennzeichnet, dass** die Dichtung (110) eine Dichtlippe, insbesondere aus silikonhaltigem Material, umfasst.

15. Schließvorrichtung (1) nach Anspruch 13 oder 14, **dadurch gekennzeichnet, dass** die Dichtung (110) in der Schließstellung vorgespannt ist.

16. Schließvorrichtung (1) nach einem der Ansprüche 13 bis 15, **dadurch gekennzeichnet, dass** durch das Bewegen des ersten Schließelements (40) in die Schließstellung der äußere Rand (140) des ersten Schließelements (40) zumindest abschnittsweise an dem inneren Ringabschnitt (132) kraftbeaufschlagt zur Anlage kommt, wobei die Dichtung (110) vorgespannt wird.

17. Schließvorrichtung (1) nach einem der vorstehenden Ansprüche, **dadurch gekennzeichnet, dass** die Schließelementanordnung (2) im wesentlichen nach außen gewölbt ist, insbesondere zumindest bereichsweise einen Kugelabschnitt bildet.

18. Schließvorrichtung (1) nach Anspruch 17 **dadurch gekennzeichnet, dass** der Deckel (80) im wesentlichen nach außen gewölbt ist, insbesondere zumindest bereichsweise einen Kugelabschnitt bildet.

19. Schließvorrichtung (1) nach Anspruch 17 oder 18, **dadurch gekennzeichnet, dass** der Radius des Kugelabschnitts der Schließelementanordnung (2) und/oder des Deckels (80) etwa 300 bis 600 mm beträgt.

20. Schließvorrichtung (1) nach einem der vorstehenden Ansprüche, **dadurch gekennzeichnet, dass** die Schließelementanordnung (2) bei der Bewegung von der Öffnungsstellung in die Schließstellung zumindest bereichsweise flächig auf dem Deckel (80) gleitet.

21. Schließvorrichtung (1) nach einem der vorstehenden Ansprüche, **dadurch gekennzeichnet, dass** die Schließelementanordnung (2) und der Deckel (80) durch eine zentrale Befestigungseinrichtung (98, 99), insbesondere eine Schraubverbindung, lösbar verbindbar sind.

22. Schließvorrichtung (1) nach einem der vorstehenden Ansprüche, **dadurch gekennzeichnet, dass** Zentriermittel (82a, 82b, 82c, 82d) zum Zentrieren des Deckels (80) auf dem Behälter (120) umfasst sind.

23. Schließvorrichtung (1) nach Anspruch 22, **dadurch gekennzeichnet, dass** die Zentriermittel (82a, 82b, 82c, 82d) Vorsprünge umfassen, welche an einem äußeren Rand des Deckels (80) befestigt sind und im wesentlichen von dem Deckel (80) nach unten ragen.

24. Schließvorrichtung (1) nach einem der vorstehenden Ansprüche, **dadurch gekennzeichnet, dass** die Bewegungseinrichtung (90) einen Handgriff (50) umfasst, wobei unter einer Drehbewegung des Handgriffs (50) mittels einer Kulissenscheibe das erste Schließelement (40) oder die Mehrzahl der Schließelemente (10, 20, 30, 40) radial bewegbar sind.

25. Schließvorrichtung (1) nach einem der vorstehenden Ansprüche, **dadurch gekennzeichnet, dass** die Bewegungseinrichtung (90) einen Handgriff (50) umfasst, wobei unter einer Drehbewegung des Handgriffs (50) mittels eines Zahnradgetriebes das erste Schließelement (40) oder die Mehrzahl der Schließelemente (10, 20, 30, 40) radial bewegbar sind.

26. Schließvorrichtung (1) nach einem der vorstehenden Ansprüche, umfassend eine Sicherheitseinrichtung (150) mit einer Blockiereinrichtung, welche die Bewegung des ersten Schließelements blockiert, wenn Überdruck in dem Gefäß herrscht und/oder einem Überdruckablassventil.

27. Dampfdruckkochtopfanordnung umfassend den Kochtopf (120) und die Schließvorrichtung (1) nach einem der vorstehenden Ansprüche.

## Claims

1. Closing device (1) for a container (120) with an opening, particularly for a saucepan with an outwardly projecting pouring edge (130), the closing device (1) comprising a lid (80) for closing the opening of the container (120), a closing element arrangement (2) with a plurality of closing elements (10, 20, 30, 40) and a movement device (90) for moving the closing elements (10, 20, 30, 40),
wherein the closing elements are adapted to be moved inwardly with the actuation of the movement device (90),
wherein the closing element arrangement (2) defines at least one open position in which the closing device (1) can be removed from the container and a closed position in which the container (120) can be closed with the lid (80), **characterised in that**
the closing elements (10, 20, 30, 40) are essentially in the form of segments of a circle and the closing elements (10, 20, 30, 40) abut each other in the closed state and form a complete covering of the lid (80).

2. Closing device (1) according to claim 1 for a container (120) with an opening, particularly for a saucepan with an outwardly projecting pouring edge (130), the closing device (1) comprising
a lid (80) for closing the opening of the container (120),
a closing element arrangement (2) with at least one closing element (40) and
a movement device (90) for moving the first closing element (40),
wherein the first closing element (40) is adapted to be moved with inward orientation upon actuation of the movement device (90) and moves upwards at least in sections during the inwardly orientated movement and the closing element (140) comprises a claw-shaped edge section (140) which comprises a first downwardly extending section (142) and a second section (144) extending in an inclined way or upwardly.

3. Closing device (1) for a container (120) with an opening and an outwardly projecting pouring edge (130) according to claim 1 which comprises an outwardly extending inner ring section (132) and an outwardly and / or downwardly extending outer ring section (134), wherein during the inwardly orientated movement the closing elements move upwards at least in sections and wherein the closing element arrangement (2) is formed in such a way that in a closed position an outer edge (140, 140', 140") of the closing elements (40, 40', 40") is adapted to be arranged at least in sections from below against the inner ring section (132) of the pouring edge (130).

4. Closing device (1) according to claim 3, **characterised in that** the closing element arrangement (2) defines at least one open position in which the closing device (1) is adapted to be removed from the container (120) and a closed position in which the container (120) is adapted to be closed with the lid (80) in a substantially fluid-tight way.

5. Closing device (1) according to claim 4, **characterised in that** the container (120) closed with the closing device (1) is pressure-resistant in the closed position up to at least 5 bar internal pressure approximately.

6. Closing device (1) according to claim 4 or 5, **characterised in that** the first closing element (40) assumes in the open position a first position and in the closed position a second position relative to the lid (80) and is adapted to be moved between the open position and the closed position.

7. Closing device (1) according to one of the preceding claims, **characterised in that** a first closing element (40, 40', 40'') comprises an outer edge (140, 140', 140") which, upon the inwardly orientated movement of the first closing element (40, 40', 40''), abuts the container (120) below the pouring edge (130) of the container (120).

8. Closing device (1) according to claim 7 for a container (120) with an outwardly projecting pouring edge (130) which comprises an outwardly extending inner ring section (132) and an outwardly and / or downwardly extending outer ring section (134), **characterised in that** the closing element arrangement (2) is formed in such a way that in the closed position the outer edge (140, 140', 140") of the first closing element (40, 40', 40") is adapted to be arranged at least in sections from below against the inner ring section (132) of the pouring edge (130).

9. Closing device (1) according to claim 8, **characterised in that** through the at least section-wise abutment of the outer edge (140, 140', 140") against the inner ring section (132) the closed position is held in a force-locking, frictional and / or self-restricting way.

10. Closing device (1) according to one of the claims 7 to 9, **characterised in that** the container (120) defines an axis (122) which extends centrally from a base of the container (120) to the opening and the outer edge (140, 140', 140") of the first closing element (40, 40', 40") comprises a downwardly extending first section (142, 142', 142") and an upwardly extending second section (144, 144', 144") wherein the second section (144, 144', 144") is arranged radially within the first section (142, 142', 142") relative to the axis (122).

11. Closing device (1) according to claim 10, **characterised in that** the outer edge (140) of the first closing element (40) comprises an inwardly extending third section (146) which is disposed between the first (142) and the second section (144).

12. Closing device (1) according to one of the preceding claims, wherein the pouring edge (130) of the container (120) defines an upper opening plane (121), **characterised in that** the inwardly and upwardly orientated movement of the outer edge (140), particularly of the second section (144) of the first closing element (40), is realised at an angle (α) in the region of 5° to 30°, preferably in the region of 10° to 20°, particularly preferably in the region of approximately 15° to the upper opening plane (121).

13. Closing device (1) according to one of the preceding claims, **characterised in that** a seal (110), circular in particular, is arranged on the lid (80), with which seal (110) the lid (80) is adapted to be closed in a fluid-tight way against the container (120).

14. Closing device (1) according to claim 13, **characterised in that** the seal (110) comprises a sealing lip, particularly made from a silicone-containing material.

15. Closing device (1) according to claim 13 or 14, **characterised in that** the seal (110) is pre-stressed in the closed position.

16. Closing device (1) according to one of the claims 13 to 15, **characterised in that** through the movement of the first closing element (40) into the closed position the outer edge (140) of the first closing element (40) abuts, at least in sections, the inner ring section (132) in a force-impacted way wherein the seal (110) is pre-stressed.

17. Closing device (1) according to one of the preceding claims, **characterised in that** the closing element arrangement (2) is substantially outwardly curved, particularly forming a spherical section at least in areas.

18. Closing device (1) according to claim 17, **characterised in that** the lid (80) is substantially outwardly curved, particularly forming a spherical section at least in areas.

19. Closing device (1) according to claim 17 or 18, **characterised in that** the radius of the spherical section of the closing element arrangement (2) and / or of the lid (80) is approximately 300 to 600 mm.

20. Closing device (1) according to one of the preceding claims, **characterised in that** the closing element arrangement (2), during the movement from the open position into the closed position, slides on the lid (80) in a flat way at least in areas.

21. Closing device (1) according to one of the preceding claims, **characterised in that** the closing element arrangement (2) and the lid (80) are adapted to be connected in a releasable way by a central fixing device (98, 99), particularly a screw joint.

22. Closing device (1) according to one of the preceding claims, **characterised in that** there are centring means (82a, 82b, 82c, 82d) for centring the lid (80) on the container (120).

23. Closing device (1) according to claim 22, **characterised in that** the centring means (82a, 82b, 82c, 82d) comprise projections which are fixed to an outer edge of the lid (80) and project essentially downwards from the lid (80).

24. Closing device (1) according to one of the preceding claims, **characterised in that** the movement device (90) comprises a handgrip (50) wherein with a rotary movement of the handgrip (50) by means of a sliding disc the first closing element (40) or the plurality of closing elements (10, 20, 30, 40) can be radially moved.

25. Closing device (1) according to one of the preceding claims, **characterised in that** the movement device (90) comprises a handgrip (50) wherein with a rotary movement of the handgrip (50) by means of gearing the first closing element (40) or the plurality of closing elements (10, 20, 30, 40) can be radially moved.

26. Closing device (1) according to one of the preceding claims, comprising a safety device (150) with a blocking device which blocks the movement of the first closing element if overpressure prevails in the vessel and / or an overpressure outlet valve.

27. Pressure cooker arrangement, comprising the saucepan (120) and the closing device (1) according to one of the preceding claims.

## Revendications

1. Dispositif de fermeture (1), destiné à un récipient (120) comportant une ouverture, notamment à une cocotte comportant un bord de déversement (130) faisant saillie vers l'extérieur, le dispositif de fermeture (1) comprenant un couvercle (80) servant à fermer l'ouverture du récipient (120), un groupement d'éléments de fermeture (2) comportant une pluralité d'éléments de fermeture (10, 20, 30, 40) et un dispositif de déplacement (90) servant à déplacer les éléments de fermeture (10, 20, 30, 40),
les éléments de fermeture étant mobiles vers l'intérieur moyennant un actionnement du dispositif de déplacement (90),
le groupement d'éléments de fermeture (2) définissant au moins une position d'ouverture, dans laquelle le dispositif de fermeture (1) peut être retiré du récipient, et une position de fermeture, dans laquelle le récipient (120) peut être fermé avec le couvercle (80),
**caractérisé en ce que**
les éléments de fermeture (10, 20, 30, 40) sont sensiblement en forme de segment de cercle et **en ce que**, à l'état fermé, les éléments de fermeture (10, 20, 30, 40) sont mutuellement contigus et forment un chapeau recouvrant la totalité de la surface du couvercle (80).

2. Dispositif de fermeture (1) selon la revendication 1, destiné à un récipient (120) comportant une ouverture, notamment à une cocotte comportant un bord de déversement (130) faisant saillie vers l'extérieur, le dispositif de fermeture (1) comprenant :
un couvercle (80) servant à fermer l'ouverture du récipient (120),
un groupement d'éléments de fermeture (2) comportant au moins un premier élément de fermeture (40), et
un dispositif de déplacement (90) servant à déplacer le premier élément de fermeture (40),
dans lequel le premier élément de fermeture (40) est mobile vers l'intérieur moyennant un actionnement du dispositif de déplacement (90) et se déplace au moins en partie vers le haut pendant le déplacement vers l'intérieur et dans lequel l'élément de fermeture comporte une bordure (140) en forme de crampon qui présente une première.section (142) s'étendant vers le bas et une deuxième section (144) s'étendant vers le haut ou obliquement vers le haut.

3. Dispositif de fermeture (1) selon la revendication 1, destiné à un récipient (120) comportant une ouverture et un bord de déversement (130) faisant saillie vers l'extérieur qui présente une section annulaire intérieure (132) s'étendant vers l'extérieur et une section annulaire extérieure (134) s'étendant vers l'extérieur et/ou vers le bas, les éléments de fermeture se déplaçant au moins en partie vers le haut pendant le déplacement vers l'intérieur et le groupement d'éléments de fermeture (2) étant réalisé de telle sorte que, -dans une position de fermeture, un bord extérieur (140, 140', 140") des éléments de fermeture (40, 40', 40") peut, au moins en partie, être appliqué par le dessous contre la section annulaire intérieure (132) du bord de déversement (130).

4. Dispositif de fermeture (1) selon la revendication 3, **caractérisé en ce que** le groupement d'éléments de fermeture (2) définit au moins une position d'ouverture dans laquelle le dispositif de fermeture (1) peut être retiré du récipient (120) et une position de fermeture dans laquelle le récipient (120) peut être fermé avec le couvercle (80) de manière sensiblement étanche aux fluides.

5. Dispositif de fermeture (1) selon la revendication 4, **caractérisé en ce que**, dans la position de fermeture, le récipient (120) fermé avec le dispositif de fermeture (1) résiste à la pression jusqu'à environ 5 bars de pression intérieure au moins.

6. Dispositif de fermeture (1) selon la revendication 4 ou 5, **caractérisé en ce que** le premier élément de fermeture (40) prend, dans la position d'ouverture, une première position et, dans la position de fermeture, une deuxième position relativement au couvercle (80) et peut être déplacé entre la position d'ouverture et la position de fermeture.

7. Dispositif de fermeture (1) selon l'une des revendications précédentes, **caractérisé en ce qu'**un premier élément de fermeture (40, 40', 40") comporte un bord extérieur (140, 140', 140") qui, lors du déplacement vers l'intérieur du premier élément de fermeture (40, 40', 40"), vient s'appliquer contre le récipient (120), sous le bord de déversement (130) du récipient (120).

8. Dispositif de fermeture (1) selon la revendication 7, destiné à un récipient (120) comportant un bord de déversement (130) faisant saillie vers l'extérieur qui présente une section annulaire intérieure (132) s'étendant vers l'extérieur et une section annulaire extérieure (134) s'étendant vers l'extérieur et/ou vers le bas, **caractérisé en ce que** le groupement d'éléments de fermeture (2) est réalisé de telle sorte que, dans la position de fermeture, le bord extérieur (140, 140', 140") du premier élément de fermeture (40, 40', 40") peut, au moins en partie, être appliqué par le dessous contre la section annulaire intérieure (132) du bord de déversement (130).

9. Dispositif de fermeture (1) selon la revendication 8, **caractérisé en ce que**, grâce à l'application, au moins en partie, du bord extérieur (140, 140', 140") contre la section annulaire intérieure (132), la position de fermeture est maintenue par adhérence, par friction et/ou de manière autobloquante.

10. Dispositif de fermeture (1) selon l'une des revendications 7 à 9, **caractérisé en ce que** le récipient (120) définit un axe (122) qui s'étend de manière centrale d'un fond du récipient (120) jusqu'à l'ouverture et **en ce que** le bord extérieur (140, 140', 140") du premier élément de fermeture (40, 40', 40") comporte une première section s'étendant vers le bas (142, 142', 142") et une deuxième section s'étendant vers le haut (144, 144', 144"), la deuxième section (144, 144', 144") étant disposée, par rapport à l'axe (122), radialement à l'intérieur de la première section (142, 142', 142").

11. Dispositif de fermeture (1) selon la revendication 10, **caractérisé en ce que** le bord extérieur (140) du premier élément de fermeture (40) comporte une troisième section (146) s'étendant vers l'intérieur, laquelle est disposée entre la première (142) et la deuxième section (144).

12. Dispositif de fermeture (1) selon l'une des revendications précédentes, le bord de déversement (130) du récipient (120) définissant un plan d'ouverture supérieur (121), **caractérisé en ce que** le déplacement du bord extérieur (140) vers l'intérieur et vers le haut, notamment de la deuxième section (144) du premier élément de fermeture (40), s'effectue en faisant, par rapport au plan d'ouverture supérieur (121), un angle (α) de 5° à 30°, de préférence de 10° à 20°, de manière particulièrement préférée d'environ 15°.

13. Dispositif de fermeture (1) selon l'une des revendications précédentes, **caractérisé en ce qu'**un joint, notamment périphérique, (110) est disposé sur le couvercle (80), joint avec lequel le couvercle (80) peut être fermé de manière étanche aux fluides contre le récipient (120).

14. Dispositif de fermeture (1) selon la revendication 13, **caractérisé en ce que** le joint (110) comprend une lèvre d'étanchéité, notamment faite d'une matière contenant de la silicone.

15. Dispositif de fermeture (1) selon la revendication 13 ou 14, **caractérisé en ce que**, dans la position de fermeture, le joint (110) est précontraint.

16. Dispositif de fermeture (1) selon l'une des revendications 13 à 15, **caractérisé en ce que**, en déplaçant le premier élément de fermeture (40) en position de fermeture, le bord extérieur (140) du premier élément de fermeture (40) vient s'appliquer, au moins en partie, contre la section annulaire intérieure (132) en étant soumis à une force, ce qui a pour effet de précontraindre le joint (110).

17. Dispositif de fermeture (1) selon l'une des revendications précédentes, **caractérisé en ce que** le groupement d'éléments de fermeture (2) est bombé sensiblement vers l'extérieur et que, notamment, il forme au moins par endroits un segment de sphère.

18. Dispositif de fermeture (1) selon la revendication 17, **caractérisé en ce que** le couvercle (80) est bombé sensiblement vers l'extérieur et que, notamment, il forme au moins par endroits un segment de sphère.

19. Dispositif de fermeture (1) selon la revendication 17 ou 18, **caractérisé en ce que** le rayon du segment de sphère du groupement d'éléments de fermeture (2) et/ou du couvercle (80) fait environ 300 à 600 mm.

20. Dispositif de fermeture (1) selon l'une des revendications précédentes, **caractérisé en ce que**, lors du déplacement de la position d'ouverture à la position de fermeture, le groupement d'éléments de fermeture (2) glisse de manière surfacique, au moins par endroit , sur le couvercle (80).

21. Dispositif de fermeture (1) selon l'une des revendications précédentes, **caractérisé en ce que** le groupement d'éléments de fermeture (2) et le couvercle (80) peuvent être reliés de manière détachable au moyen d'un dispositif de fixation central (98, 99), notamment au moyen d'un assemblage par vis.

22. Dispositif de fermeture (1) selon l'une des revendications précédentes, **caractérisé en ce qu'**il y a des moyens de centrage (82a, 82b, 82c, 82d) servant à centrer le couvercle (80) sur le récipient (120).

23. Dispositif de fermeture (1) selon la revendication 22, **caractérisé en ce que** les moyens de centrage (82a, 82b, 82c, 82d) comprennent des saillies qui sont fixées à un bord extérieur du couvercle (80) et font sensiblement saillie du couvercle (80) vers le bas.

24. Dispositif de fermeture (1) selon l'une des revendications précédentes, **caractérisé en ce que** le dispositif de déplacement (90) comprend une poignée (50), le premier élément de fermeture (40) ou la pluralité d'éléments de fermeture (10, 20, 30, 40) pouvant être déplacés radialement à l'aide d'une plaque coulissante moyennant une rotation de la poignée (50).

25. Dispositif de fermeture (1) selon l'une des revendications précédentes, **caractérisé en ce que** le dispositif de déplacement (90) comprend une poignée (50), le premier élément de fermeture (40) ou la pluralité d'éléments de fermeture (10, 20, 30, 40) pouvant être déplacés radialement à l'aide d'un engrenage moyennant une rotation de la poignée (50).

26. Dispositif de fermeture (1) selon l'une des revendications précédentes, comprenant un dispositif de sécurité (150) comportant un dispositif de blocage qui bloque le déplacement du premier élément de fermeture s'il règne une pression excessive dans le récipient et/ou dans une soupape de décharge de surpression.

27. Dispositif formant autocuiseur comprenant la cocotte (120) et le dispositif de fermeture (1) selon l'une des revendications précédentes.
